# EUROPÄISCHE PATENTSCHRIFT

(11) **EP 3 559 429 B1**
(45) Veröffentlichungstag und Bekanntmachung des Hinweises auf die Patenterteilung: **04.12.2024**
(21) Anmeldenummer: 17821864.0
(22) Anmeldetag: 13.12.2017
(51) Int. Cl.: F02B 37/16, F16K 1/46, F16K 17/20, F16K 27/02, F16K 31/06, F02B 37/12, F01D 17/10, F02B 39/16

(54) **VENTIL**
VALVE
SOUPAPE

(30) Priorität: 22.12.2016 DE 102016226106
(43) Veröffentlichungstag der Anmeldung: 30.10.2019
(73) Patentinhaber: Vitesco Technologies GmbH, 93055 Regensburg (DE)
(72) Erfinder: BONANNO, Rosario, 65812 Bad Soden (DE)
(74) Vertreter: Vitesco Technologies
(86) Internationale Anmeldenummer: PCT/EP2017/082640
(87) Internationale Veröffentlichungsnummer: WO 2018/114529

(56) Entgegenhaltungen:
- WO-A1-2014/068765
- WO-A1-2016/041659
- DE-A1- 102012 211 575
- US-A1- 2003 042 450
- US-A1- 2012 313 329
- US-A1- 2013 313 455

## Beschreibung

Gegenstand der Erfindung ist ein Ventil nach Anspruch 1.

Solche Ventile werden unter anderem als Schubumluftventil am Turbolader in Kraftfahrzeugen eingesetzt (siehe zum Beispiel US 2013/313455 A1, WO 2014/068765 A1 oder WO 2016/041659 A1), um im Schubbetrieb einen Bypass zur Saugseite freizugeben und sind somit bekannt. Um ein zu starkes Abbremsen des Turboladers zu verhindern, aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Ventilsitz wird vom Gehäuse des Turboladers gebildet, an dem das Ventil angeflanscht wird. Darüber hinaus muss der axial verschiebliche Kolben gegen das Gehäuse abgedichtet sein. Hierzu ist es bekannt, in dem Gehäuse eine V-förmige Dichtung anzuordnen, deren Schenkel jeweils am zweiten Gehäuseteil und an der Mantelfläche des Kolbens anliegen. Diese Dichtung erfordert zudem eine Fixierung im Gehäuseteil, um ein dichtes Anliegen am Kolben zu gewährleisten. Dazu wird die Dichtung durch ein weiteres Bauteil mit dem zweiten Gehäuseteil verpresst. Dies erfordert jedoch zusätzlichen konstruktiven Aufwand, der zu höheren Kosten solcher Ventile führt.

Der Erfindung liegt daher die Aufgabe zugrunde, ein Ventil mit verbesserter Dichtfunktion zu schaffen. Gleichzeitig soll das Ventil einfacher aufgebaut und kostengünstig sein.

Gelöst wird die Aufgabe dadurch, dass die Dichtung mit dem zweiten Gehäuseteil verbunden ist, wobei die Dichtung einen Bereich des zweiten Gehäuseteils derart umgibt, dass dieser Bereich zumindest einen Hinterschnitt für die Dichtung bildet.

Das Verbinden der Dichtung mit dem Gehäuseteil, indem die Dichtung einen Bereich des zweiten Gehäuseteils so umgibt, dass ein Hinterschnitt gebildet wird, gewährleistet einen sicheren und zuverlässigen Sitz der Dichtung am Gehäuseteil. Unter einem Hinterschnitt wird dabei eine Ausbildung der Dichtung und/oder des Gehäuseteils verstanden, die ein Entfernen der Dichtung aus ihrer vorbestimmten Position mittels einer einfachen translatorischen oder rotatorischen Bewegung nicht zulässt oder zumindest derart erschwert, dass ein Entfernen der Dichtung nur mit Beschädigungen der Dichtung möglich sind. Der Vorteil des erfindungsgemäßen Ventils besteht darin, dass durch den zumindest einen Hinterschnitt die Dichtung über die Lebensdauer zuverlässig in ihrer Position gehalten wird. Zusätzliche Befestigungselemente sind dazu nicht notwendig. Dadurch lässt sich ein besonders kostengünstiges Ventil herstellen. Des Weiteren lassen sich Hinterschnitte bereits in kleinen Dimensionen erzeugen, so dass das Ventil im Bereich des zweiten Gehäuseteils keinen zusätzlichen Bauraum erfordert.

In einer einfachen Ausgestaltung umfasst der Hinterschnitt zumindest einen Bereich, wobei dieser Bereich durch einen Radius gebildet ist. Im einfachsten Fall ist das dem Gehäuse abgewandte Ende des zweiten Gehäuseteils abgewinkelt. Die Winkel können hierbei zwischen 5° und 180°, vorzugsweise 90° liegen. Dabei hat sich gezeigt, dass die Sicherheit gegen ein Lösen mit zunehmendem Winkel steigt.

Die Sicherheit gegen ein Lösen der Dichtung lässt sich auch dadurch erhöhen, dass mehrere durch Radien gebildete Bereiche den Hinterschnitt bilden.

In einer anderen vorteilhaften Ausgestaltung umfasst der Hinterschnitt zumindest einen Bereich, der zumindest eine Ausnehmung, vorzugsweise 2 bis 12 Ausnehmungen und insbesondere 4 bis 8 Ausnehmungen besitzt. Indem die Dichtung diese Ausnehmungen ausfüllt, ist sie untrennbar mit dem zweiten Gehäuseteil verbunden.

Obwohl jeder der eben beschrieben Hinterschnitte für sich allein bereits eine ausreichende Sicherheit gegen ein Lösen der Dichtung bietet, kann es dennoch sinnvoll sein, eine Kombination von durch Radien gebildete Bereiche und Ausnehmungen vorzusehen. Insbesondere dann, wenn das Ventil unter besonders rauen äußeren Bedingungen eingesetzt wird.

Um eine gute Dichtwirkung bei geringem Verschließ über die gesamte Lebensdauer zu erreichen, besteht eine vorteilhafte Ausgestaltung darin, die Dichtung aus einem Fluorkautschuk (FKM-Gummi herzustellen. Dieses Material ist ausreichend robust und erlaubt auch bei Temperaturen von 180 °C einen zuverlässigen Betrieb des Ventils.

Um eine besonders sichere Verbindung mit dem zweiten Gehäuseteil zu erzielen, kann die Dichtung an dem zweiten Gehäuseteil aufvulkanisiert werden.

Die Lebensdauer der Dichtung wird gemäß einer weiteren vorteilhaften Ausgestaltung dadurch erhöht, dass die Dichtung eine in axialer Richtung wirkende Dichtlippe besitzt. Durch diese Ausrichtung der Dichtwirkung wird erreicht, dass die Dichtung mit dem Kolben nur in einer Position, nämlich der Endlage, in Kontakt tritt. Ein permanenter Kontakt mit dem Kolben, insbesondere während des Bewegens des Kolbens mit der damit verbundenen Reibung wird vermieden.

Eine gute Beständigkeit gegenüber verschiedensten durchströmenden Medien und Mediengemischen, vorzugsweise Abgas eines Verbrennungsmotors, wird in einer besonders vorteilhaften Ausgestaltung dadurch erreicht, dass das zweite Gehäuseteil aus Metall, vorzugsweise aus Edelstahl, insbesondere aus einem Chrom-Nickel-Stahl besteht. Zudem lässt sich das zweite Gehäuseteil dadurch auch mit geringen Wandstärken im Bereich von 0,3 mm bis 3 mm, vorzugsweise 0,5 mm bis 1 mm, mit ausreichender Formstabilität ausbilden.

Das zweite Gehäuseteil lässt sich gemäß einer weiteren vorteilhaften Ausgestaltung besonders kostengünstig als Tiefziehteil herstellen. Die Formgebung des zweiten Gehäuseteils lässt sich in nur einem Arbeitsschritt ohne weitere Bearbeitungen erzielen.

In gleicher Weise ist es vorteilhaft, wenn der Kolben aus Metall besteht, vorzugsweise aus Edelstahl, insbesondere einem Chrom-Nickel-Stahl. Ein solcher Kolben lässt sich ebenfalls mittels Tiefziehen herstellen, wodurch sich in einem Arbeitsschritt die Dichtfläche für die Dichtung am zweiten Gehäuseteil ausbilden lässt. Das erfindungsgemäße Ventil lässt sich dadurch besonders kostengünstig fertigen.

Mit der Anordnung einer axial wirkenden Dichtung, die mit dem Kolben nur im geschlossenen Zustand zusammenwirkt, wird erreicht, dass die Berührung von Dichtung und Kolben auf einen Zeitraum beschränkt wird, in der sich der Kolben in Ruhe befindet einschließlich eines Zeitraums unmittelbar bevor der Kolben zur Ruhe kommt. Damit ist gemeint, dass sich Kolben und Dichtung bereits kurz vor der Schließstellung berühren. Mit der letzten Bewegung des Kolbens in die Schließstellung wird die Dichtung so verformt, dass die Dichtflächen gegeneinander vorgespannt sind. Mit der axial wirkenden Dichtung wird daher verhindert, dass die Dichtung während der Bewegung des Kolbens beim Öffnen und Schließen in Kontakt mit dem Kolben ist und einer damit einhergehenden Reibung ausgesetzt ist. Ein reibungsbedingter Verschleiß wird somit verhindert und die Lebensdauer der Dichtung verbessert.

An einem Ausführungsbeispiel wird die Erfindung näher beschrieben. Es zeigt in
- Fig. 1: eine Schnittdarstellung des erfindungsgemäßen Ventils,
- Fig. 2: eine vergrößerte Darstellung des zweiten Gehäuseteils und
- Fig. 3, 4: eine weitere Ausgestaltung des zweiten Gehäuseteils.

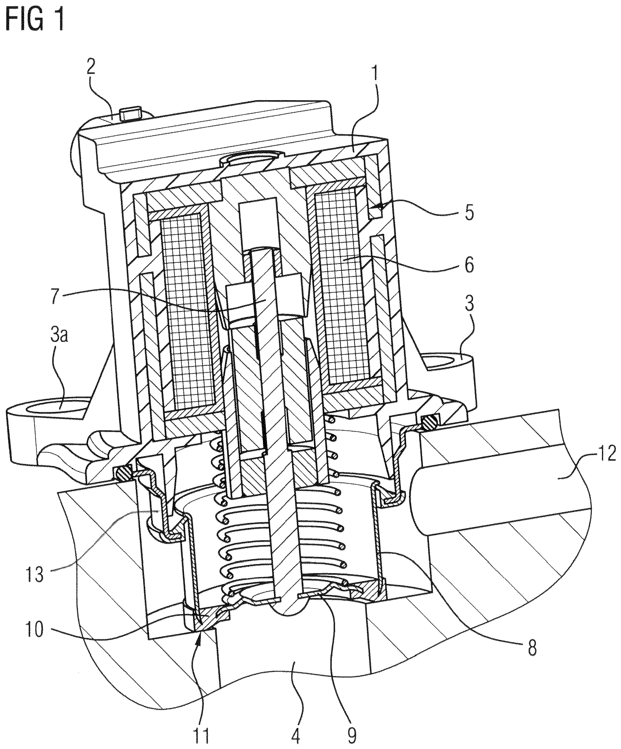

Figur 1 zeigt das Ventil, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In der gezeigten Einbaulage schließt sich an den Flansch 3 ein zweites Gehäuseteil 13 an. In dem Gehäuse 1 ist ein Solenoid 5 mit einer Spule 6 und einem Metallstift 7 angeordnet. Der Metallstift 7 ist mit einem topfförmigen Kolben 8 verbunden, der am Umfang seines Bodens 9 eine axial abstehende ringförmige Dichtung 10 besitzt. In der gezeigten Schließstellung liegt die Dichtung 10 auf dem Ventilsitz 11 an, um die Bypassleitung 4 zu verschließen, so dass kein Medium von aus der Leitung 4 in die Leitung 12 strömen kann. Eine Feder 7a drückt dabei den Kolben 8 in Richtung Ventilsitz 11.

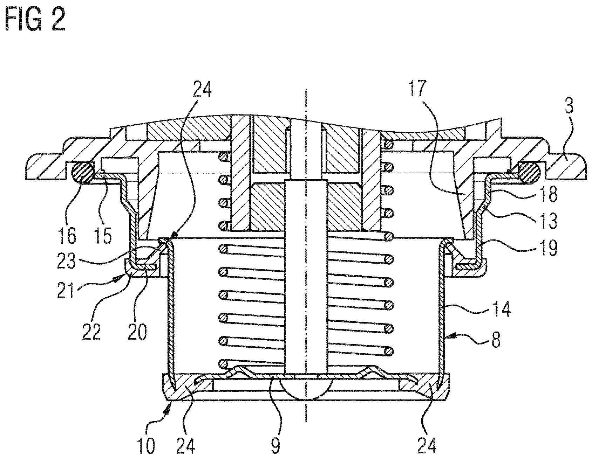

Figur 2 zeigt das zweite Gehäuseteil 13 mit seiner zylindrischen Grundform und den Kolben 8 mit seiner zylindrischen Mantelfläche 14 in Schließstellung. Gehäuseteil 13 und Kolben 8 sind Tiefziehteile aus Chrom-Nickel-Stahl. Das zweite Gehäuseteil 13 besitzt an seinem dem Gehäuse 1 zugewandten Ende eine nach radial außen weisenden Kante 15. Konzentrisch zur Kante 15 ist im Gehäuse 1 ein als Dichtung 16 wirkender O-Ring im Gehäuse 1 angeordnet. Das Gehäuse 1 besitzt einen sich vom Solenoid 5 in Richtung Kolben 8 erstreckenden zylindrischen Abschnitt 17. Das zweite Gehäuseteil 13 ist auf den zylindrischen Abschnitt 17 soweit aufgepresst, dass die Kante 15 am Gehäuse 1 anliegt. Für eine definierte Anlagefläche für das Einpressen besitzt das zweite Gehäuseteil 13 eine zylindrische Mantelfläche mit zwei Durchmessern. Der größere Durchmesser 18 ist zum Gehäuse 1 ausgerichtet und ist größer als der zylindrische Abschnitt 17, während der kleinere Durchmesser 19 so gewählt ist, dass die Innenseite die Anlagefläche für die Pressverbindung mit dem Abschnitt 17 bildet. Der Bereich des größeren Durchmessers 18, dient der Entkopplung der Anlagefläche 15 am Gehäuse 1 und der Pressverbindung im Bereich des kleineren Durchmessers 19.

Das zweite Gehäuseteil 13 besitzt weiter an seinem dem Gehäuse 1 abgewandten Ende einen um 90° umgebogenen, nach radial innen weisenden Kragen 20. Eine am zweiten Gehäuseteil 13 angeordnete Dichtung 21 umschließt einen Bereich des Gehäuseteils 13. Dieser Bereich umfasst einen Teil der zylindrischen Mantelfläche 19 und den Kragen 20. Mantelfläche 19 und Kragen 20 bilden einen Hinterschnitt, der ein Lösen der Dichtung 21 verhindert. Die Dichtung 21 aus Fluorkautschuk besteht aus einem Grundkörper 22, der den genannten Bereich am zweiten Gehäuseteil 13 umgibt und einer in Richtung Gehäuse weisenden Dichtlippe 23. Die Dichtlippe 23 wirkt mit einer Dichtfläche 24 am Kolben 8 in Form einer Axialdichtung zusammen. Der Kolben 8 besitzt dazu an seinem dem Gehäuse 1 zugewandten Ende eine nach radial außen abstehende Kante, die im geschlossenen Zustand des Ventils auf der Dichtlippe 23 aufliegt.

Am Boden 9 des Kolbens 8 ist die Dichtung 10 angeordnet. Es handelt sich hierbei um einen Fluorkautschuk. Die Dichtung 10 ist an den Kolben 8 aufvulkanisiert. Der Boden 9 weist mehrere Ausnehmungen 24 auf, die von der Dichtung 10 ausgefüllt sind. Auf diese Weise ist die Dichtung 10 unlösbar mit dem Kolben 8 verbunden.

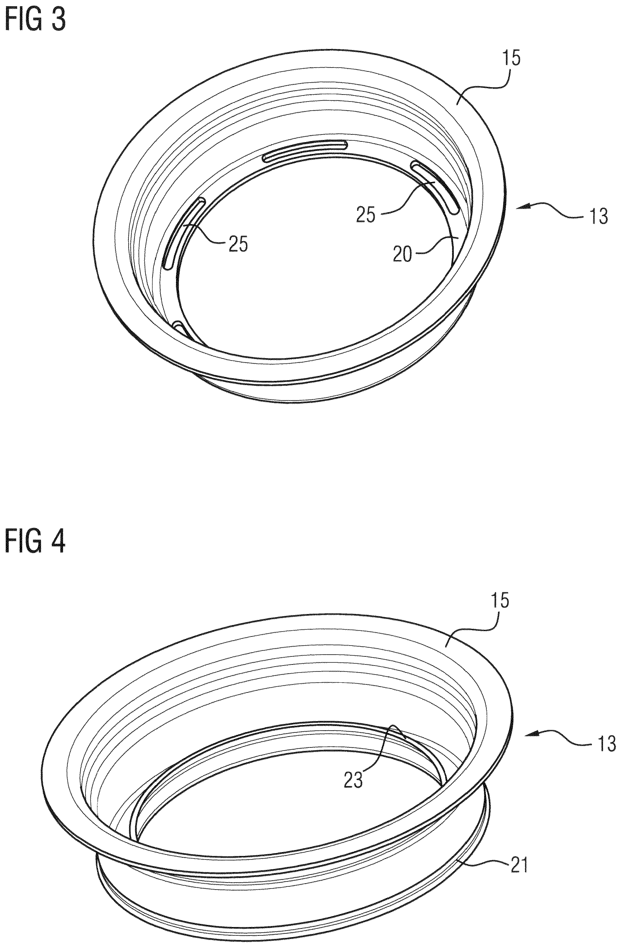

Figur 3 zeigt das zweite Gehäuseteil 13 ohne die Dichtung 21. Der Kragen 20 besitzt 6 Ausnehmungen 25, welche ebenfalls Hinterschnitte für die Dichtung 21 bilden, da die Dichtung die Ausnehmungen 25 ausfüllt.

Figur 4 zeigt das zweite Gehäuseteil 13 mit der Dichtung 21 und der zum Kolben ausgerichteten Dichtlippe 23.

## Patentansprüche

1. Ventil mit einem Gehäuse (1), einem in dem Gehäuse angeordneten Solenoid (5),
einem von dem Solenoid bewegbaren Stift (7) und einem mit dem Stift verbundenen topfförmigen Kolben (8), der am Umfang seines Bodens eine axial abstehende ringförmige Dichtung (10) besitzt, welche in Schließstellung auf einem Ventilsitz (11) anliegt, wobei ein zweites Gehäuseteil (13) vorgesehen ist welches an dem Gehäuse anliegt und den Kolben teilweise aufnimmt,
und
einer zwischen dem zweiten Gehäuseteil und dem Kolben angeordneten Dichtung (21),
**dadurch gekennzeichnet, dass** die zwischen dem zweiten Gehäuseteil (13) und dem Kolben (8) angeordnete Dichtung (21) mit dem
zweiten Gehäuseteil (13) verbunden ist, wobei die zwischen dem zweiten Gehäuseteil (13) und dem Kolben (8) angeordnete Dichtung (21) einen
Bereich des zweiten Gehäuseteils (13) derart umgibt, dass dieser Bereich zumindest einen Hinterschnitt (20, 25) für die zwischen dem zweiten Gehäuseteil (13) und dem Kolben (8) angeordnete Dichtung (21)
bildet.

2. Ventil nach Anspruch 1, **dadurch gekennzeichnet, dass** der Hinterschnitt (20) zumindest einen Bereich umfasst, der durch einen Radius gebildet ist.

3. Ventil nach Anspruch 1, **dadurch gekennzeichnet, dass** der Hinterschnitt (25) zumindest einen Bereich umfasst, der zumindest eine Ausnehmung, vorzugsweise 2 bis 12 Ausnehmungen und insbesondere 4 bis 8 Ausnehmungen besitzt.

4. Ventil nach zumindest einem der vorhergehenden Ansprüche, **dadurch gekennzeichnet, dass** die zwischen dem zweiten Gehäuseteil (13) und dem Kolben (8) angeordnete Dichtung (21) aus einem FKM-Gummi besteht.

5. Ventil nach zumindest einem der vorhergehenden Ansprüche, **dadurch gekennzeichnet, dass** die zwischen dem zweiten Gehäuseteil (13) und dem Kolben (8) angeordnete Dichtung (21) an dem zweiten Gehäuseteil (13) aufvulkanisiert ist.

6. Ventil nach zumindest einem der vorhergehenden Ansprüche, **dadurch gekennzeichnet, dass** die zwischen dem zweiten Gehäuseteil (13) und dem Kolben (8) angeordnete Dichtung (21) eine in axialer Richtung wirkende Dichtlippe (23) besitzt.

7. Ventil nach zumindest einem der vorhergehenden Ansprüche, **dadurch gekennzeichnet, dass** das zweite Gehäuseteil (13) aus Metall besteht, vorzugsweise aus Edelstahl, insbesondere ein Chrom-Nickel-Stahl ist.

8. Ventil nach zumindest einem der vorhergehenden Ansprüche, **dadurch gekennzeichnet, dass** das zweite Gehäuseteil (13) ein Tiefziehteil ist.

9. Ventil nach Anspruch 8, **dadurch gekennzeichnet, dass** der Kolben (8) aus Metall besteht, vorzugsweise aus Edelstahl, insbesondere aus einem Chrom-Nickel-Stahl.

10. Ventil nach zumindest einem der vorhergehenden Ansprüche, **dadurch gekennzeichnet, dass** der Kolben (8) ein Tiefziehteil ist.

## Claims

1. Valve having a housing (1), a solenoid (5) arranged in the housing, a pin (7) movable by the solenoid, and a pot-shaped piston (8) which is connected to the pin and which, at the circumference of its base, has an axially projecting annular seal (10) which bears against a valve seat (11) in a closed position, wherein a second housing part (13) is provided which bears against the housing and which partially accommodates the piston, and a seal (21) arranged between the second housing part and the piston, **characterized in that** the seal (21) arranged between the second housing part (13) and the piston (8) is connected to the second housing part (13), wherein the seal (21) arranged between the second housing part (13) and the piston (8) surrounds a region of the second housing part (13) such that said region forms at least one undercut (20, 25) for the seal (21) arranged between the second housing part (13) and the piston (8).

2. Valve according to Claim 1, **characterized in that** the undercut (20) comprises at least one region which is formed by a radius.

3. Valve according to Claim 1, **characterized in that** the undercut (25) comprises at least one region which has at least one recess, preferably 2 to 12 recesses and in particular 4 to 8 recesses.

4. Valve according to at least one of the preceding claims, **characterized in that** the seal (21) arranged between the second housing part (13) and the piston (8) is composed of an FKM rubber.

5. Valve according to at least one of the preceding claims, **characterized in that** the seal (21) arranged between the second housing part (13) and the piston (8) is vulcanized on the second housing part (13).

6. Valve according to at least one of the preceding claims, **characterized in that** the seal (21) arranged between the second housing part (13) and the piston (8) has a sealing lip (23) which acts in an axial direction.

7. Valve according to at least one of the preceding claims, **characterized in that** the second housing part (13) is composed of metal, preferably of high-grade steel, in particular a chromium-nickel steel.

8. Valve according to at least one of the preceding claims, **characterized in that** the second housing part (13) is a deep-drawn part.

9. Valve according to Claim 8, **characterized in that** the piston (8) is composed of metal, preferably of high-grade steel, in particular of a chromium-nickel steel.

10. Valve according to at least one of the preceding claims, **characterized in that** the piston (8) is a deep-drawn part.

## Revendications

1. Soupape comprenant un corps (1), un solénoïde (5) agencé dans le corps, une tige (7) apte à être déplacée par le solénoïde et un piston (8) en forme de coupelle relié à la tige, lequel piston possède, sur la périphérie de son fond, un joint annulaire (10) faisant saillie axialement qui, en position de fermeture, repose sur un siège de soupape (11), une deuxième partie de corps (13) étant prévue, laquelle repose sur le corps et reçoit partiellement le piston, et un joint (21) agencé entre la deuxième partie de corps et le piston, **caractérisée en ce que** le joint d'étanchéité (21) agencé entre la deuxième partie de corps (13) et le piston (8) est relié à la deuxième partie de corps (13), le joint d'étanchéité (21) agencé entre la deuxième partie de corps (13) et le piston (8) entourant une zone de la deuxième partie de corps (13) de telle sorte que cette zone forme au moins une contre-dépouille (20, 25) pour le joint d'étanchéité (21) agencé entre la deuxième partie de corps (13) et le piston (8).

2. Soupape selon la revendication 1, **caractérisée en ce que** la contre-dépouille (20) comprend au moins une zone qui est formée par un rayon.

3. Soupape selon la revendication 1, **caractérisée en ce que** la contre-dépouille (25) comprend au moins une zone possédant au moins un évidement, de préférence de 2 à 12 évidements et notamment de 4 à 8 évidements.

4. Soupape selon au moins l'une des revendications précédentes, **caractérisée en ce que** le joint (21) agencé entre la deuxième partie de corps (13) et le piston (8) est constitué d'un caoutchouc FKM.

5. Soupape selon au moins l'une des revendications précédentes, **caractérisée en ce que** le joint (21) agencé entre la deuxième partie de corps (13) et le piston (8) est vulcanisé sur la deuxième partie de corps (13).

6. Soupape selon au moins l'une des revendications précédentes, **caractérisée en ce que** le joint (21) agencé entre la deuxième partie de corps (13) et le piston (8) possède une lèvre d'étanchéité (23) agissant dans la direction axial.

7. Soupape selon au moins l'une des revendications précédentes, **caractérisée en ce que** la deuxième partie de corps (13) est en métal, de préférence en acier inoxydable, en particulier en acier au chrome-nickel.

8. Soupape selon au moins l'une des revendications précédentes, **caractérisée en ce que** la deuxième partie de corps (13) est une pièce emboutie.

9. Soupape selon la revendication 8, **caractérisée en ce que** le piston (8) est en métal, de préférence en acier inoxydable, notamment en un acier au chrome-nickel.

10. Soupape selon au moins l'une des revendications précédentes, **caractérisée en ce que** le piston (8) est une pièce emboutie.
